# EUROPÄISCHE PATENTSCHRIFT

(11) **EP 2 541 746 B1**
(45) Veröffentlichungstag und Bekanntmachung des Hinweises auf die Patenterteilung: **20.01.2021**
(21) Anmeldenummer: 12172432.2
(22) Anmeldetag: 18.06.2012
(51) Int. Cl.: H02M 1/32, H02M 5/458

(54) **Verfahren zum Entladen eines Zwischenkreiskondensators an einem Umrichter sowie entsprechende Schaltung**
Method for discharging a direct link capacitor at a converter and respective electrical circuit
Procédé de déchartge d'un condensateur de circuit intermédiaire d'un convertisseur et circuit correspondant

(30) Priorität: 28.06.2011 DE 102011078211
(43) Veröffentlichungstag der Anmeldung: 02.01.2013
(73) Patentinhaber: GE Energy Power Conversion Technology Limited, Rugby Warwickshire CV21 1BU (GB)
(72) Erfinder: Boni, Marco, 10627 Berlin (DE); Saniter, Christoph, Dr., 14169 Berlin (DE)
(74) Vertreter: Serjeants LLP

(56) Entgegenhaltungen:
- WO-A1-2011/020786
- US-A1- 2006 033 466

## Beschreibung

Die Erfindung betrifft ein Verfahren zum Betreiben einer elektrischen Schaltung, insbesondere eines Umrichters.

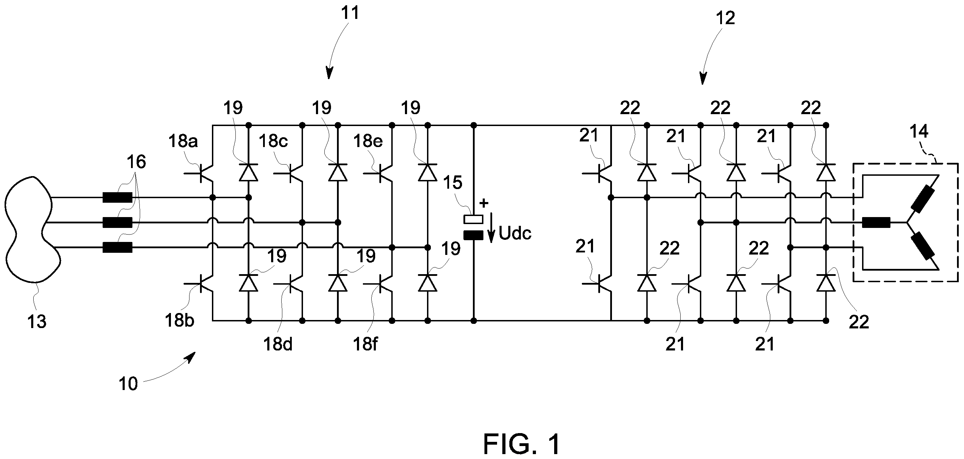

Eine derartige Schaltung ist aus der DE 10 2007 042 246 A1 bekannt. In der dortigen Figur 1 ist ein netzseitiger Umrichter 22 über einen Gleichspannungs-Zwischenkreis mit einem maschinenseitigen Wechselrichter 20 verbunden. Der Gleichspannungs-Zwischenkreis weist einen Energiespeicher 26 in der Form eines Kondensators auf. An dem Kondensator liegt eine sogenannte Zwischenkreisspannung an.

Insbesondere in dem maschinenseitigen Wechselrichter sind üblicherweise schaltbare Leistungshalbleiterbauelemente enthalten, beispielsweise IGBTs (IGBT = insulated gate bipolar transistor) oder GTO-Thyristoren (GTO = gate turn off) oder dergleichen. Diese Leistungshalbleiterbauelemente können nur innerhalb vorgegebener Spannungsgrenzen ein- und/oder ausgeschaltet werden. Außerhalb dieser Spannungsgrenzen kann ein Umschalten in den nicht-leitenden Zustand zu einer Schädigung oder gar zu einer Zerstörung des jeweiligen Leistungshalbleiterbauelements führen. Sind beispielsweise IGBTs vorhanden, so können diese IGBTs nur dann ausgeschaltet, also nichtleitend geschaltet werden, wenn die Zwischenkreisspannung am Kondensator eine vorgegebene Maximalspannung nicht überschreitet.

Es ist jedoch möglich, dass - aus welchen Gründen auch immer - die Zwischenkreisspannung am Kondensator ansteigt und die vorgegebene Maximalspannung übersteigt. Für diesen Fall ist in der DE 10 2007 042 246 A1 gemäß der dortigen Figur 1 eine sogenannte Chopperschaltung 24 vorhanden, die aus einem Widerstand und einem dazu in Reihe geschalteten Transistor besteht. Übersteigt die Zwischenkreisspannung die vorgegebene Maximalspannung, so kann der Transistor leitend geschaltet werden, so dass eine Parallelschaltung aus dem Kondensator, an dem die Zwischenkreisspannung anliegt, und dem Widerstand entsteht. Dies hat zur Folge, dass der Kondensator sich über den Widerstand entladen kann und die Zwischenkreisspannung damit abnimmt. Ersichtlich erfordert die DE 10 2007 042 246 A1 einen erhöhten Aufwand vor allem hinsichtlich der genannten Chopperschaltung.

US 2006/0033466 beschreibt einen Umrichter mit einem netzseitigen Umrichter 10 mit Leistungshalbleiterbauelementen, der während des regenerativen Betriebs als Stromrichter betrieben werden kann, wobei Energie von einem Motor 3 zu einer Wechselstromquelle 2 fließt. Regenerative Energie von dem Motor wird zunächst in einem Gleichstromzwischenkreiskondensator C gespeichert, und die Gleichstromzwischenkreisspannung steigt an. Erreicht die Gleichstromzwischenkreisspannung einen oberen Grenzwert, wird der netzseitige Umrichter 10 betrieben, um Energie zurück zur Wechselstromquelle 2 zu leiten. Dies führt dazu, dass die Gleichstromzwischenkreisspannung abfällt. Wenn die Gleichstromzwischenkreisspannung einen unteren Grenzwert erreicht, wird der Betrieb des netzseitigen Umrichters 10 gestoppt, und die Gleichstromspannung steigt an. Dies wird fortgesetzt, bis der Motor 3 zum Stillstand kommt und keine regenerative Energie mehr produziert wird.

Aufgabe der Erfindung ist es, eine elektrische Schaltung mit einem verminderten Aufwand zu schaffen.

Diese Aufgabe wird durch ein Verfahren nach dem Anspruch 1 gelöst. Ebenfalls wird die Aufgabe durch eine elektrische Schaltung nach dem Anspruch 5 gelöst.

Mit Hilfe der Erfindung wird also eine Entladung des Kondensators ermöglicht, ohne dass hierzu eine Chopperschaltung oder sonstige zusätzliche Bauelemente erforderlich ist/sind. Die am Kondensator anliegende Gleich- bzw. Zwischenkreisspannung kann also ohne großen Aufwand wieder innerhalb die vorgegebenen Spannungsgrenzen gebracht werden, in denen die Leistungshalbleiterbauelemente ein- und vor allem auch ausgeschaltet werden können.

Die in ihren leitenden Zustand geschalteten Leistungshalbleiterbauelemente erst dann wieder in ihren nicht-leitenden Zustand geschaltet, wenn die Gleichspannung kleiner ist als die Maximalspannung bzw. es werden die in ihren leitenden Zustand geschalteten Leistungshalbleiterbauelemente erst dann wieder in ihren nicht-leitenden Zustand geschaltet werden, wenn die Gleichspannung gleich groß ist wie eine an dem Energieversorgungsnetz vorhandene Wechselspannung. Die zum

Entladen des Kondensators leitend geschalteten Leistungshalbleiterbauelemente werden also nicht entsprechend einem Normalbetrieb in den nicht-leitenden Zustand geschaltet, sondern in Abhängigkeit von der Maximalspannung oder der Wechselspannung. Damit wird gewährleistet, dass eine Schädigung der Leistungshalbleiterbauelemente nicht möglich ist.

Weitere Merkmale, Anwendungsmöglichkeiten und Vorteile der Erfindung ergeben sich aus der nachfolgenden Beschreibung von Ausführungsbeispielen der Erfindung, die in Figuren dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in den Figuren.

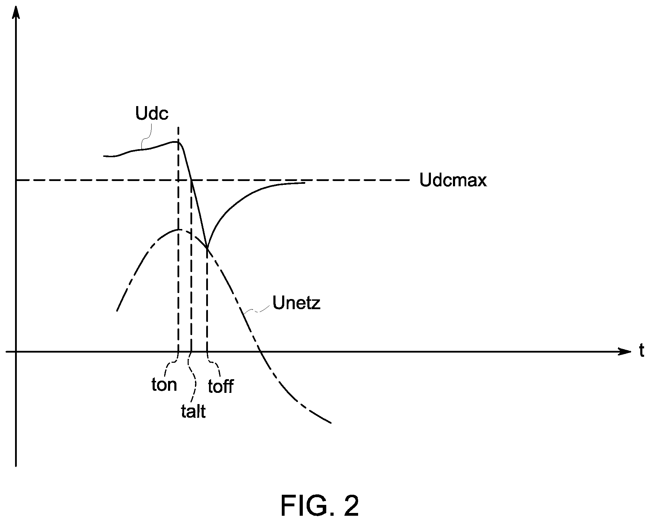

Die Figur 1 zeigt ein schematisches Schaltbild eines Ausführungsbeispiels einer erfindungsgemäßen elektrischen Schaltung und die Figur 2 zeigt ein schematisches Zeitdiagramm von Spannungsverläufen der Schaltung der Figur 1.

In der Figur 1 ist eine elektrische Schaltung 10 dargestellt, die einen netzseitigen Stromrichter 11 und einen maschinenseitigen Stromrichter 12 aufweist. Der netzseitige Stromrichter 11 ist im vorliegenden Ausführungsbeispiel mit einem dreiphasigen Energieversorgungsnetz 13 verbunden. An den maschinenseitigen Stromrichter 12 ist im vorliegenden Ausführungsbeispiel eine dreiphasige Last 14 in Sternschaltung angeschlossen, bei der es sich um einen Generator oder einen Elektromotor handeln kann. Zwischen den netzseitigen Stromrichter 11 und den maschinenseitigen Stromrichter 12 ist ein Kondensator 15 geschaltet, bei dem es sich auch um eine Kondensatorbank in der Form einer Mehrzahl von parallel und/oder in Reihe geschalteten Kondensatoren handeln kann. Zwischen dem netzseitigen Stromrichter 11 und dem Energieversorgungsnetz 13 können Drosseln 16 oder sonstige Induktivitäten vorhanden sein.

Es wird darauf hingewiesen, dass es sich auch um ein zweiphasiges Energieversorgungsnetz oder um eine zwei- oder mehrphasige Last handeln kann.

Der netzseitige Stromrichter 11 ist im vorliegenden Ausführungsbeispiel dreiphasig ausgebildet. Es versteht sich, dass der Stromrichter 11 auch zwei- oder mehrphasig ausgebildet sein kann.

Der netzseitige Stromrichter 11 weist sechs schaltbare Leistungshalbleiterbauelemente 18a, 18b, 18c, 18d, 18e, 18f auf, die jeweils mit einer parallel und in Gegenrichtung geschalteten Diode 19 versehen sind. Es sind immer zwei Leistungshalbleiterbauelemente 18a, 18b bzw. 18c, 18d bzw. 18e, 18f in Reihe geschaltet, und zwar in Durchlassrichtung von einem positiven Potential zu einem negativen Potential. Zu diesen drei entstehenden Reihenschaltungen ist der Kondensator 15 parallel geschaltet. An den drei Reihenschaltungen und damit an dem Kondensator 15 liegt eine von dem positiven zu dem negativen Potential gerichtete Gleichspannung Udc an. Die Größe dieser Gleichspannung Udc kann in nicht-dargestellter Weise von einem Steuergerät ermittelt und/oder mit Hilfe von Sensoren überwacht werden.

Die Verbindungspunkte der beiden Leistungshalbleiterbauelemente 18a, 18b bzw. 18c, 18d bzw. 18e, 18f von jeder der drei Reihenschaltungen sind mit jeweils einer Phase des Energieversorgungsnetzes 13 verbunden.

Die Leistungshalbleiterbauelemente 18a, 18b, 18c, 18d, 18e, 18f werden nachfolgend in ihrer Gesamtheit auch mit dem Bezugszeichen 18 bezeichnet.

Der maschinenseitige Stromrichter 12 weist sechs schaltbare Leistungshalbleiterbauelemente 21 auf, die jeweils mit einer parallel und in Gegenrichtung geschalteten Diode 22 versehen sind. Es sind immer zwei Leistungshalbleiterbauelemente 21 in Reihe geschaltet, und zwar in Durchlassrichtung von dem positiven Potential zu dem negativen Potential. Zu diesen drei entstehenden Reihenschaltungen ist der Kondensator 15 parallel geschaltet. An den drei Reihenschaltungen und damit an dem Kondensator 15 liegt die von dem positiven zu dem negativen Potential gerichtete Gleichspannung Udc an.

Die Verbindungspunkte der beiden Leistungshalbleiterbauelemente 21 von jeder der drei Reihenschaltungen sind mit jeweils einer Phase der Last 14 verbunden.

Bei den Leistungshalbleiterbauelementen 18, 21 kann es sich beispielsweise um IGBTs (IGBT = insulated gate bipolar transistor) handeln, die auch modulartig zusammengeschaltet sein können. Die Leistungshalbleiterbauelemente 18, 21 können in nicht-dargestellter Weise beispielsweise von dem bereits erwähnten Steuergerät einzeln angesteuert und damit in einen leitenden oder einen nicht-leitenden Zustand geschaltet werden.

Es wird darauf hingewiesen, dass es sich bei dem netzseitigen Stromrichter 11 und/oder bei dem maschinenseitigen Stromrichter 12 auch um einen drei- oder mehrstufigen Stromrichter handeln kann, beispielsweise um einen sogenannten Dreipunkt-NPC-Stromrichter.

In einem motorischen Normalbetrieb, in dem als Last 14 beispielsweise ein Elektromotor vorhanden ist, werden die zwischen den Phasen des Energieversorgungsnetzes 13 vorhandenen Wechselspannungen von dem netzseitigen Umrichter 11 gleichgerichtet und damit in die an dem Kondensator 15 anliegende Gleichspannung Udc umgewandelt. Hierzu werden die Leistungshalbleiterbauelemente 18 entsprechend angesteuert. Von dem maschinenseitigen Umrichter 12 wird die Gleichspannung Udc dann in eine wechselstromartige Spannung umgeformt, die an die Phasen der Last 14 weitergegeben wird. Hierzu werden die Leistungshalbleiterbauelemente 21 entsprechend angesteuert. Die Frequenz der Wechselspannung des Energieversorgungsnetzes 13 unterscheidet sich dabei üblicherweise von der Frequenz der Spannung an der Last 14. Auf diese Weise kann der Elektromotor mit Energie versorgt und damit angetrieben werden.

In einem generatorischen Normalbetrieb, in dem als Last 14 beispielsweise ein Generator vorhanden ist, wird die Energie in umgekehrter Richtung weitergegeben. Von dem Generator wird Energie erzeugt, die von dem maschinenseitigen Stromrichter 12 in die Gleichspannung Udc umgewandelt und dann von dem netzseitigen Stromrichter 11 in das Energieversorgungsnetz 13 eingespeist wird. Hierzu werden die Leistungshalbleiterbauelemente 18, 21 entsprechend angesteuert. Auch hier unterscheidet sich die Frequenz des Generators üblicherweise von der Frequenz des Energieversorgungsnetzes 13.

Es besteht nun die Möglichkeit, dass sich die Gleichspannung Udc an dem Kondensator 15 - aus welchen Gründen auch immer - erhöht. Liegt die Gleichspannung Udc oberhalb der von den Leistungshalbleiterbauelementen abschaltbaren Maximalspannung Udcmax (also wenn Udc > Udcmax), so kann dies zur Folge haben, dass ein Umschalten der Leistungshalbleiterbauelemente 18, 21 in deren nicht-leitenden Zustand zu einer Schädigung oder gar Zerstörung des jeweiligen Leistungshalbleiterbauelements 18, 21 führt. Zur Vermeidung einer derartigen Schädigung oder Zerstörung werden die Leistungshalbleiterbauelemente 18, 21 bei einem Überschreiten der Maximalspannung Udcmax (also bei Udc = Udcmax) in ihren nicht-leitenden Zustand geschaltet. Weiterhin wird ein erneutes derartiges Umschalten in den nicht-leitenden Zustand zumindest solange gesperrt, wie die Überschreitung der Maximalspannung Udcmax anhält (also solange Udc > Udcmax). Der vorstehend beschriebene Normalbetrieb der elektrischen Schaltung 10, der ein fortlaufendes Ein- und Ausschalten der Leistungshalbleiterbauelemente 18, 21 erfordert, ist somit zumindest vorübergehend unterbrochen.

In der Figur 2 ist die an dem Kondensator 15 anliegende Gleichspannung Udc über der Zeit t aufgetragen. Weiterhin ist die vorgenannte Maximalspannung Udcmax eingetragen. Bei der Maximalspannung Udcmax kann es sich, wie beispielhaft dargestellt, um einen konstanten Wert, aber auch um einen veränderlichen Wert handeln. Weiterhin ist die an einer der Phasen des Energieversorgungsnetzes 13 vorhandene Wechselspannung Unetz über der Zeit t aufgetragen. Die Maximalspannung Udcmax ist dabei betragsmäßig größer als der betragsmäßig maximale Wert der Wechselspannung Unetz.

Ausgangspunkt ist der bereits erläuterte Zustand, dass die Gleichspannung Udc größer ist als die Maximalspannung Udcmax, und dass deshalb die Leistungshalbleiterbauelemente 18, 21 sich in ihrem nicht-leitenden Zustand befinden. Dieser Zustand wird von dem Steuergerät erkannt und erzeugt und liegt in der Figur 2 vor dem Zeitpunkt ton vor.

Der Zeitpunkt ton als solcher befindet sich zeitlich etwa im betragsmäßigen Maximum der Wechselspannung Unetz.

Etwa im Zeitpunkt ton werden beispielsweise die beiden Leistungshalbleiterbauelemente 18a, 18d von dem Steuergerät in deren leitenden Zustand geschaltet. Dies ist möglich, da nur das Umschalten in den nicht-leitenden Zustand gesperrt ist. Es entsteht somit eine elektrische Verbindung von dem positiven Potential über das Leistungshalbleiterbauelement 18a, über das Energieversorgungsnetz 13 und über das Leistungshalbleiterbauelement 18d zu dem negativen Potential.

Alternativ oder zusätzlich können auch die Leistungshalbleiterbauelemente 18a, 18f und/oder 18c, 18b und/oder 18c, 18f und/oder 18e, 18b und/oder 18e, 18d in deren leitenden Zustand geschaltet werden. Bei jeder dieser Kombinationen entsteht eine elektrische Verbindung von dem positiven Potential über das Energieversorgungsnetz 13 zu dem negativen Potential.

Die durch das erläuterte Schalten der jeweiligen Leistungshalbleiterbauelemente entstehende elektrische Verbindung von dem positiven Potential über das Energieversorgungsnetz 13 zu dem negativen Potential ermöglicht eine Entladung des Kondensators 15 in Richtung zu dem Energieversorgungsnetz 13. Diese Entladung hat eine Verminderung der an dem Kondensator 15 anliegenden Gleichspannung Udc zur Folge. Dies ist in der Figur 2 nach dem Zeitpunkt ton dargestellt.

Von dem Steuergerät wird nunmehr überwacht, wann die Gleichspannung Udc gleich groß wird wie die Wechselspannung Unetz. Dies ist in der Figur 2 im Zeitpunkt toff der Fall.

Im Zeitpunkt toff werden die in ihren leitenden Zustand geschalteten Leistungshalbleiterbauelemente wieder in ihren nicht-leitenden Zustand geschaltet. Dies ist möglich, da die an dem Kondensator 15 anliegende Gleichspannung Udc nunmehr kleiner ist als die Maximalspannung Udcmax. Damit ist ein Umschalten der Leistungshalbleiterbauelemente in deren nicht-leitenden Zustand nicht mehr gesperrt.

Alternativ ist es möglich, dass die in ihren leitenden Zustand geschalteten Leistungshalbleiterbauelemente nicht erst im Zeitpunkt toff wieder abgeschaltet werden, sondern bereits in demjenigen Zeitpunkt, in dem die Gleichspannung Udc die Maximalspannung Udcmax unterschreitet. Dies ist in der Figur 2 in dem Zeitpunkt talt der Fall.

Nachdem die an dem Kondensator 15 anliegende Gleichspannung Udc wieder kleiner ist als die Maximalspannung Udcmax, und nachdem die vorgenannten Leistungshalbleiterbauelemente wieder in ihren nicht-leitenden Zustand zurückgeschaltet sind, kann die gesamte elektrische Schaltung 10 wieder in dem erläuterten Normalbetrieb betrieben werden. Dies ergibt sich daraus, dass ein Umschalten der Leistungshalbleiterbauelemente 18, 21 in deren nicht-leitenden Zustand aufgrund der Unterschreitung der Maximalspannung Udcmax nicht mehr gesperrt ist.

Gegebenenfalls wird vor dem Umschalten der genannten Leistungshalbleiterbauelemente im Zeitpunkt ton in deren leitenden Zustand von dem Steuergerät derjenige Ausgleichsstrom ermittelt, der nach dem Zeitpunkt ton fließen würde. Dieser Ausgleichsstrom hängt dabei insbesondere von der Gleichspannung Udc, der Maximalspannung Udcmax, der Gegenspannung Unetz, den vorhandenen induktiven und kapazitiven Lasten und so weiter, ab. Überschreitet der ermittelte Ausgleichsstrom einen vorgegebenen Wert, so können die Leistungshalbleiterbauelemente nicht ohne Weiteres in ihren leitenden Zustand geschaltet werden, sondern es müssen weitere, vorliegend nicht näher beschriebene Maßnahmen vorab getroffen werden.

Es wird darauf hingewiesen, dass es sich abweichend von der Figur 1 bei der Last 14 auch um ein zweites elektrisches Energieversorgungsnetz handeln kann, beispielsweise um ein Bahnnetz. In diesem Fall kann die Entladung des Kondensators 15 auch in Richtung zu diesem zweiten Energieversorgungsnetz 14 hin erfolgen. Ebenfalls wird darauf hingewiesen, dass das erste Energieversorgungsnetz 13 und/oder die Last 14 der Figur 1 auch zweiphasig oder mehrphasig ausgebildet sein können.

Weiterhin wird darauf hingewiesen, dass es sich bei dem netzseitigen und/oder dem maschinenseitigen Stromrichter 11, 12 abweichend von der Figur 1 auch um sogenannte Mehrlevel-Schaltungen handeln kann. In diesen Fällen ist es gegebenenfalls erforderlich, mehrere der vorhandenen Leistungshalbleiterbauelemente leitend zu schalten, um eine Entladung des Kondensators 15 in Richtung zu dem bzw. zu den Energieversorgungsnetz/en zu erzeugen.

## Patentansprüche

1. Verfahren zum Betreiben einer elektrischen Schaltung (10), insbesondere eines Umrichters, wobei die Schaltung (10) einen netzseitigen Stromrichter (11) aufweist, der mit einem Kondensator (15) gekoppelt ist, wobei der netzseitige Stromrichter (11) mindestens zwei Reihenschaltungen von jeweils mindestens zwei Leistungshalbleiterbauelementen (18a, 18b; 18c, 18d; 18e, 18f) aufweist, wobei die Reihenschaltungen jeweils zwischen einem positiven Potential und einem negativen Potential zu dem Kondensator (15) parallel geschaltet sind, und wobei der netzseitige Stromrichter (11) mit einem Energieversorgungsnetz (13) gekoppelt ist, **dadurch gekennzeichnet, dass** die an dem Kondensator (15) anliegende Gleichspannung (Udc) ermittelt wird, dass eine Maximalspannung (Udcmax) vorgegeben wird, wobei bei einer Überschreitung der Maximalspannung (Udcmax) die Leistungshalbleiterbauelemente in ihren nicht-leitenden Zustand geschaltet werden, dass ein weiteres Umschalten der Leistungshalbleiterbauelemente in ihren nicht-leitenden Zustand mindestens so lange gesperrt wird, wie die Maximalspannung (Udcmax) überschritten wird und der normale Betrieb der elektrischen Schaltung (10) vorübergehend unterbrochen wird, und dass, wenn die Gleichspannung (Udc) größer ist als die Maximalspannung (Udcmax) und eine an einer der Phasen des Energieversorgungsnetzes (13) vorhandene Wechselspannung (Unetz) sich im betragsmäßigen Maximum befindet, mindestens zwei der Leistungshalbleiterbauelemente in ihren leitenden Zustand geschaltet werden, was in mindestens einer elektrischen Verbindung zwischen dem positiven Potential und dem negativen Potential über die Leistungshalbleiterbauelemente, die in ihren leitenden Zustand geschaltet worden sind, und dem Energieversorgungsnetz (13) resultiert, sodass der Kondensator (15) in Richtung zu dem Energieversorgungsnetz (13) entladen wird, und wobei die in ihren leitenden Zustand geschalteten Leistungshalbleiterbauelemente erst dann wieder in ihren nicht-leitenden Zustand geschaltet werden, wenn die Gleichspannung (Udc) kleiner ist als die Maximalspannung (Udcmax).

2. Verfahren nach Anspruch 1, wobei die in ihren leitenden Zustand geschalteten Leistungshalbleiterbauelemente erst dann wieder in ihren nicht-leitenden Zustand geschaltet werden, wenn die Gleichspannung (Udc) gleich groß ist wie eine an dem Energieversorgungsnetz (13) vorhandene Wechselspannung (Unetz).

3. Verfahren nach einem der vorstehenden Ansprüche, wobei das obere Leistungshalbleiterbauelement (18a) der ersten Reihenschaltung und das untere Leistungshalbleiterbauelement (18d) der zweiten Reihenschaltung jeweils in seinen leitenden Zustand geschaltet wird.

4. Verfahren nach einem der vorstehenden Ansprüche, wobei die Maximalspannung (Udcmax) derart gewählt wird, dass erst bei deren Überschreitung gegebenenfalls die Möglichkeit einer Zerstörung eines Leistungshalbleiterbauelements bei einem Schalten von seinem leitenden in seinen nicht-leitenden Zustand vorhanden ist.

5. Elektrische Schaltung (10), insbesondere Umrichter, wobei die Schaltung (10) einen netzseitigen Stromrichter (11) aufweist, der mit einem Kondensator (15) gekoppelt ist, wobei der netzseitige Stromrichter (11) mindestens zwei Reihenschaltungen von jeweils mindestens zwei Leistungshalbleiterbauelementen (18a, 18b; 18c, 18d; 18e, 18f) aufweist, wobei die Reihenschaltungen jeweils zwischen einem positiven Potential und einem negativen Potential zu dem Kondensator (15) parallel geschaltet sind, und wobei der netzseitige Stromrichter (11) mit einem Energieversorgungsnetz (13) gekoppelt ist, wobei ein Steuergerät vorhanden ist, mit dem die an dem Kondensator (15) anliegende Gleichspannung (Udc) ermittelbar ist, dass eine Maximalspannung (Udcmax) vorgebbar ist, wobei bei einer Überschreitung der Maximalspannung (Udcmax) die Leistungshalbleiterbauelemente in ihren nicht-leitenden Zustand geschaltet werden, dass ein weiteres Umschalten der Leistungshalbleiterbauelemente in ihren nicht-leitenden Zustand mindestens so lange gesperrt wird, wie die Maximalspannung (Udcmax) überschritten wird und der normale Betrieb der elektrischen Schaltung (10) vorübergehend unterbrochen wird, und dass, wenn die Gleichspannung (Udc) größer ist als die Maximalspannung (Udcmax), mindestens zwei der Leistungshalbleiterbauelemente von dem Steuergerät in ihren leitenden Zustand schaltbar sind, was in mindestens einer elektrischen Verbindung zwischen dem positiven Potential und dem negativen Potential über die Leistungshalbleiterbauelemente, die in ihren leitenden Zustand geschaltet worden sind, und dem Energieversorgungsnetz (13) resultiert, sodass der Kondensator (15) in Richtung zu dem Energieversorgungsnetz (13) entladen wird, und wobei die in ihren leitenden Zustand geschalteten Leistungshalbleiterbauelemente erst dann wieder in ihren nicht-leitenden Zustand geschaltet werden, wenn die Gleichspannung (Udc) kleiner ist als die Maximalspannung (Udcmax).

## Claims

1. Method for operating an electrical circuit (10), in particular a convertor, wherein the circuit (10) has a mains-side power convertor (11) coupled to a capacitor (15), wherein the mains-side power convertor (11) has at least two series connections between at least two power semiconductor components (18a, 18b; 18c, 18d; 18e, 18f), wherein the series connections are each connected in parallel between a positive potential and a negative potential to the capacitor (15), and wherein the mains-side power convertor (11) is coupled to an energy supply network (13), **characterised in that** the DC voltage (Udc) applied to the capacitor (15) is determined, that a maximum voltage (Udcmax) is predefined, wherein, if the maximum voltage (Udcmax) is exceeded, the power semiconductor components are switched into their non-conductive state, that further switching of the power semiconductor components into their non-conductive state is blocked for at least as long as the maximum voltage (Udcmax) is exceeded and the normal operation of the electrical circuit (10) is temporarily interrupted, and that, if the DC voltage (Udc) is greater than the maximum voltage (Udcmax) and an AC voltage (Unet) present at one of the phases of the energy supply network (13) is in the maximum amount, at least two of the power semiconductor components are switched into their conductive state, which results in at least one electrical connection between the positive potential and the negative potential via the power semiconductor components which have been switched into their conductive state and the energy supply network (13), such that the capacitor (15) is discharged in the direction of the energy supply network (13), and wherein the power semiconductor components switched into their conductive state are only switched back into their non-conductive state if the DC voltage (Udc) is smaller than the maximum voltage (Udcmax).

2. Method according to claim 1, wherein the power semiconductor components switched into their conductive state are only switched back into their non-conductive state if the DC voltage (Udc) is equal to an AC voltage (Unet) present in the energy supply network (13).

3. Method according to any of the preceding claims, wherein the upper power semiconductor component (18a) of the first series connection and the lower power semiconductor component (18d) of the second series connection are each switched into their conductive state.

4. Method according to any of the preceding claims, wherein the maximum voltage (Udcmax) is selected in such a way that only when it is exceeded is there a possibility of a power semiconductor component being destroyed when switching from its conductive into its non-conductive state.

5. Electrical circuit (10), in particular convertor, wherein the circuit (10) has a mains-side power convertor (11) coupled to a capacitor (15), wherein the mains-side power convertor (11) has at least two series connections between at least two power semiconductor components (18a, 18b; 18c, 18d; 18e, 18f), wherein the series connections are each connected in parallel between a positive potential and a negative potential to the capacitor (15), and wherein the mains-side power convertor (11) is coupled to an energy supply network (13), wherein a control device is present with which the DC voltage (Udc) applied to the capacitor (15) can be determined, that a maximum voltage (Udcmax) can be predefined, wherein, if the maximum voltage (Udcmax) is exceeded, the power semiconductor components are switched into their non-conductive state, that further switching of the power semiconductor components into their non-conductive state is blocked for at least as long as the maximum voltage (Udcmax) is exceeded and the normal operation of the electrical circuit (10) is temporarily interrupted, and that, if the DC voltage (Udc) is greater than the maximum voltage (Udcmax), at least two of the power semiconductor components can be switched by the control device into their conductive state, which results in at least one electrical connection between the positive potential and the negative potential via the power semiconductor components which have been switched into their conductive state and the energy supply network (13), such that the capacitor (15) is discharged in the direction of the energy supply network (13), and wherein the power semiconductor components switched into their conductive state are only switched back into their non-conductive state if the DC voltage (Udc) is smaller than the maximum voltage (Udcmax).

## Revendications

1. Procédé de fonctionnement d'un circuit électrique (10), en particulier un variateur, dans lequel le circuit (10) présente un convertisseur côté réseau (11), qui est couplé à un condensateur (15), dans lequel le convertisseur côté réseau (11) présente au moins deux montages en série respectivement d'au moins deux composants semi-conducteurs de puissance (18a, 18b ; 18c, 18d ; 18e, 18f), dans lequel les montages en série sont connectés en parallèle au condensateur (15) respectivement entre un potentiel positif et un potentiel négatif, et dans lequel le convertisseur côté réseau (11) est couplé à un réseau d'alimentation en énergie (13), **caractérisé en ce que** la tension continue (Udc) appliquée au condensateur (15) est déterminée, **en ce qu'**une tension maximale (Udcmax) est prédéterminée, dans laquelle, en cas de dépassement de la tension maximale (Udcmax), les composants semi-conducteurs de puissance sont commutés dans leur état non conducteur, **en ce qu'**une commutation ultérieure des composants semi-conducteurs de puissance dans leur état non conducteur est bloquée au moins aussi longtemps que la tension maximale (Udcmax) est dépassée et que le fonctionnement normal du circuit électrique (10) est temporairement interrompu, et **en ce que** lorsque la tension continue (Udc) est supérieure à la tension maximale (Udcmax) et qu'une tension alternative (Unetz) présente sur l'une des phases du réseau d'alimentation en énergie (13) est à sa valeur maximale, au moins deux des composants semi-conducteurs de puissance sont commutés dans leur état conducteur, ce qui entraîne au moins une connexion électrique entre le potentiel positif et le potentiel négatif par l'intermédiaire des composants semi-conducteurs de puissance qui ont été commutés dans leur état conducteur et le réseau d'alimentation en énergie (13), de sorte que le condensateur (15) est déchargé vers le réseau d'alimentation en énergie (13), et dans lequel les composants semi-conducteurs de puissance qui ont été commutés dans leur état conducteur ne sont repassés dans leur état non conducteur que lorsque la tension continue (Udc) est inférieure à la tension maximale (Udcmax).

2. Procédé selon la revendication 1, dans lequel les composants semi-conducteurs de puissance qui ont été commutés dans leur état conducteur ne sont repassés dans leur état non conducteur que lorsque la tension continue (Udc) est égale à une tension alternative (Unetz) présente sur le réseau d'alimentation en énergie (13).

3. Procédé selon l'une quelconque des revendications précédentes, dans lequel le composant semi-conducteur de puissance supérieur (18a) du premier montage en série et le composant semi-conducteur de puissance inférieur (18d) du second montage en série sont chacun commutés dans leur état conducteur.

4. Procédé selon l'une quelconque des revendications précédentes, dans lequel la tension maximale (Udcmax) est sélectionnée de sorte qu'il est possible qu'un composant semi-conducteur de puissance soit éventuellement détruit lors du passage de son état conducteur à son état non conducteur uniquement lorsqu'elle est dépassée.

5. Circuit électrique (10), en particulier variateur, dans lequel le circuit (10) présente un convertisseur côté réseau (11), qui est couplé à un condensateur (15), dans lequel le convertisseur côté réseau (11) présente au moins deux montages en série respectivement d'au moins deux composants semi-conducteurs de puissance (18a, 18b; 18c, 18d ; 18e, 18f), dans lequel les montages en série sont connectées en parallèle au condensateur (15) respectivement entre un potentiel positif et un potentiel négatif, et dans lequel le convertisseur côté réseau (11) est couplé à un réseau d'alimentation en énergie (13), dans lequel un dispositif de commande est présent, avec lequel la tension continue (Udc) appliquée au condensateur (15) peut être déterminée, en ce qu'une tension maximale (Udcmax) peut être prédéterminée, dans laquelle, en cas de dépassement de la tension maximale (Udcmax), les composants semi-conducteurs de puissance sont commutés dans leur état non conducteur, en ce qu'une commutation ultérieure des composants semi-conducteurs de puissance dans leur état non conducteur est bloquée au moins aussi longtemps que la tension maximale (Udcmax) est dépassée et que le fonctionnement normal du circuit électrique (10) est temporairement interrompu, et en ce que lorsque la tension continue (Udc) est supérieure à la tension maximale (Udcmax), au moins deux des composants semi-conducteurs de puissance peuvent être commutés dans leur état conducteur par le dispositif de commande, ce qui entraîne au moins une connexion électrique entre le potentiel positif et le potentiel négatif par l'intermédiaire des composants semi-conducteurs de puissance qui ont été commutés dans leur état conducteur et le réseau d'alimentation en énergie (13), de sorte que le condensateur (15) est déchargé vers le réseau d'alimentation en énergie (13), et dans lequel les composants semi-conducteurs de puissance qui ont été commutés dans leur état conducteur ne sont repassés dans leur état non conducteur que lorsque la tension continue (Udc) est inférieure à la tension maximale (Udcmax).
